# EUROPEAN PATENT SPECIFICATION

(11) **EP 2 978 323 B1**
(45) Date of publication and mention of the grant of the patent: **26.02.2020**
(21) Application number: 14776509.3
(22) Date of filing: 27.03.2014
(51) Int. Cl.: A23L 2/50, A23L 3/32

(54) **EXTENDING THE SHELF LIFE OF LIQUID COMESTIBLES**
VERLÄNGERUNG DER HALTBARKEIT FLÜSSIGER NAHRUNGSMITTEL
EXTENSION DE LA DURÉE DE CONSERVATION DE LIQUIDES COMESTIBLES

(30) Priority: 27.03.2013 US 201361805650 P
(43) Date of publication of application: 03.02.2016
(73) Proprietor: BNR Technology Development, LLC, Conroe, TX 77304 (US)
(72) Inventor: NORRIS, Jeffrey, B., Montgomery, TX 77356 (US)
(74) Representative: Heinze, Ekkehard
(86) International application number: PCT/US2014/031986
(87) International publication number: WO 2014/160845

(56) References cited:
- GB-A- 276 254
- GB-A- 2 487 796
- JP-A- H08 290 168
- US-A- 4 116 802
- US-A- 4 374 714
- US-A- 4 374 714
- US-A- 4 534 991
- US-A- 4 695 472
- US-A- 4 695 472
- US-A- 4 857 343
- US-A- 4 938 856
- US-A- 5 048 404
- US-A- 5 393 541
- US-A- 5 662 031
- US-A- 6 020 018
- US-A- 6 086 932
- US-A- 6 093 432
- US-A1- 2005 028 679
- US-B1- 6 534 107

## Description

### BACKGROUND OF INVENTION

### 1. Field of the Invention

This invention relates to a method of treating fruit juices, in order to improve their shelf life.

### 2. Description of Related Art

It is well know that fruit juices such as orange juice prepared for retail sales have a limited shelf life. The juice becomes darker in color and loses flavor due to, for example, oxide deterioration. So called "fresh orange juice" is prepared by extracting juice from oranges at harvest time and storing it in large vats. Typically, free oxygen in the juice is removed and the juice is pasteurized at temperatures about 185-201 degrees Fahrenheit. These treatments result in flavor loss such that flavoring is added to the juice after pasteurization. Different manufacturers prepare different "flavor packs" so that the flavor varies from brand to brand. One prior art solution to this problem is to deoxidize the comestible by generating hydrogen in an electrolytic cell that has a permeable membrane separating the anode and cathode sections from each other. The anode compartment contains a highly dissociatable, non-oxidizable inorganic acid electrolyte. When the cell is connected to a suitable source of electric power, hydrogen is formed at the cathode to remove the oxygen from the juice. See U.S. Patent No. 4,374,714 to Hebral, granted February 22, 1983, the entire contents of which is incorporated herein by reference.

Another approach is taught by the U.S. Patent No. 4,857,343 to Herbral issued August 15, 1989. This patent teaches the concept of lowering the pasteurization temperature required for orange juice by lowering the pH of the fruit juice. The high temperature of pasteurization causes carmelization or darkening of the juice which is undesirable.

Pasteurization destroys bacteria and bacterial enzymes which promote bacterial growth. Bacteria and bacterial enzymes are believed to contribute to the discoloring of the liquid and the sour taste associated with aging liquid comestibles such as milk and fruit juices. Pasteurization also inactivates certain enzymes which causes the pulp to separate from the juice. This process has also been found to deter the tendency of pulp in orange juice from increasing in density as it ages.
Each of the following patent documents discloses a method of prolonging the shelf life of a comestible liquid by using an electrolytic cell: US 6 086 932 A, US 6 093 432 A, US 4 938 856 A, GB 276 254 A, US 4 695 472 A, US 2005/028679 A1, US 4 857 343 A

### BRIEF SUMMARY OF THE INVENTION

The present invention prolongs the shelf life of fruit juices such as orange juice by destroying bacteria and possibly the bacterial enzymes by subjecting the juice to an electrical current.

Electrical current has been found to be effective in killing bacteria. See for example, U.S. Patent No. 5,922,209 to Yoshida et al granted July 13, 1999 and U.S. Patent No. 5,948,273 to Yoshida et al granted September 7, 1999. The phenomenon is also discussed in "Effects of Micro Amperage, Medium and Bacterial Concentration on Ionlophoretic Killing of Bacteria in Fluid," CP Davis et al, Department of Microbiology, University of Texas, Medical Branch, Galveston, Antimicrobial Agent and Chemotherapy, April 1989, pages 442 - 447.

The juice to be treated is introduced into an electrolytic cell where electrical current within the cell destroys the bacteria in the juice.

### BRIEF DESCRIPTION OF THE SEVERAL VIEWS OF THE DRAWING(S)

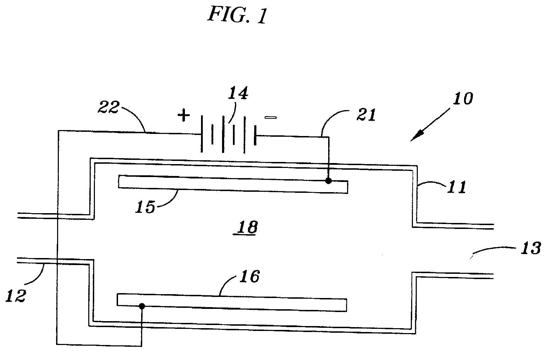

FIG. 1 illustrates an embodiment of a fluid processing system suitable for carrying out an embodiment of the method according to the invention.

### DETAILED DESCRIPTION OF THE INVENTION

Referring to FIG. 1, the method according to an embodiment of the invention can be practiced as follows. The comestible fluid to be treated is introduced through an inlet 12 into an electrolytic cell 10 which includes a housing 11 which has an interior chamber 18. A pair of electrodes 15 and 16 are located within the housing and are connected to a source of power 14 via wires 21 and 22 or the like. Power source 14 is preferable a direct current power source.

In order to prevent damage to the good components of the juice, the current should be kept to the minimum amount necessary to kill the bacteria without adversely affecting the other components. It is also desirable to use noble electrodes to avoid releasing metallic ions into the juices. The use of inert electrodes made of a thin titanium plate coated with a ruthenium coating performed extremely well. They stopped the release of ions in the juice while allowing sufficient current to only destroy the bacteria.

Treated juice is removed from the cell via outlet 13 for further handling. Inlet 12 and outlet 13 may contain valves so that the liquid is either batch treated or treated as a continuous flow passing through the cell.

The size of the inlet, outlet and reservoir 18 is chosen so as to allow a sufficient residence time to destroy the bacteria and enzymes.

Direct current is utilized providing between .01 amps and .5 amps per square inch through the juice.

A test using fresh squeezed orange juice was conducted using an electrolytic cell with 2 titanium electrodes with a ruthenium coating spaced 0,63cm (¼") apart. The electrodes were 10cm (4 inches) wide and 15cm (6 inches) long. The total volume of the cell was approximately one liter (quart). The test protocol was to test different batches of juice utilizing different current densities and varied residence times. The purpose of the test is to do a visual examination of the samples at 90 day intervals looking for color changes, signs of bacteria growth or a difference in the volume of pulp settling on the bottom of the sample container. Since color is one of the primary indicators that the orange juice has lost its freshness and therefore not marketable, color changes were the primary indicator for freshness for this testing. The current densities and residence times for the samples are listed below along with the observed color changes at 90 day intervals

| | | **DAYS** | |
|---|---|---|---|
| | | **90** | **180** |
| Sample 1: current density -. 1,5mA/cm² (.01 amps per square inch) | Residence time: 10 seconds * | Good | Poor |
| Sample 2: current density - 4,5mA/cm² (.03 amps per square inch) | Residence time: 10 seconds * | Good | Good |
| Sample 3: current density - 7,5mA/cm² (.05 amps per square inch) | Residence time: 10 seconds * | Poor | Poor |
| Sample 4: current density - 10,5mA/cm² (.07 amps per square inch) | Residence time: 10 seconds * | Poor | Poor |
| Sample 5: current density - 1,5m A/cm² (.01 amps per square inch) | Residence time: 30 seconds * | Good | Poor |
| Sample 6: current density - 6mA/cm² (.04 amps per square inch) | Residence time: 30 seconds * | Good | Good |
| Sample 7: current density - 9mA/cm² (.06 amps per square inch) | Residence time: 30 seconds * | Poor | Poor |
| Sample 8: current density - 12mA/cm² (.08 amps per square inch) | Residence time: 30 seconds * | Poor | Poor |

Definition good: Shows no significant color change, no bacterial growth, pulp maintains volume.

Definition poor: Shows visible color change, usually darker color. May or may not show some bacterial growth and usually shows a change in volume of pulp settling on bottom of sample container.

Test results proved that using the correct current density and the correct residence time can result in the juice maintaining color and pulp density.

Although the present invention has been described with respect to specific details, it is not intended that such details should be regarded as limitations on the scope of the invention, except to the extent that they are included in the accompanying claims.

## Claims

1. A method of prolonging the shelf life of fresh squeezed orange juice comprising:
providing an electrolytic cell having a pair of titanium electrodes with a ruthenium coating spaced 0,63 cm (1/4 inch) apart, each electrode 10 cm (4 inch) wide and 15 cm (6 inch) long, an inlet for the liquid, an outlet for the liquid and a power source;
introducing the orange juice into the electrolytic cell via the inlet;
energizing the electrodes so as to cause current to pass from a first electrode to a second electrode; and
removing the liquid to be treated from the electrolytic cell via the outlet, wherein
a) a direct current power source is utilized to energize the electrodes at a current density of 1,5mA/cm² (0.01 amps per square inch) or 4,5mA/cm² (0.03 amps per square inch) and the orange juice resides in the electrolytic cell for 10 seconds or
b) a direct current power source is utilized to energize the electrodes at a current density of 1,5mA/cm² (0.01 amps per square inch) and the orange juice resides in the electrolytic cell for 30 seconds.

2. The method of claim 1 wherein the orange juice is continuously introduced to and withdrawn from the electrolytic cell.

3. The method of claim 1 wherein the orange juice is held in the electrolytic cell for a given period of time and then removed.

## Patentansprüche

1. Verfahren zum Verlängern der Haltbarkeit von frisch gepresstem Orangensaft, umfassend:
Bereitstellen einer Elektrolysezelle, die ein Titanelektrodenpaar mit einer Rutheniumbeschichtung im Abstand von 0,63 cm (1/4 Zoll) aufweist, wobei jede Elektrode 10 cm (4 Zoll) breit und 15 cm (6 Zoll) lang ist, mit einem Einlass für die Flüssigkeit, einem Auslass für die Flüssigkeit und einer Stromquelle;
Einleiten des Orangensaftes in die Elektrolysezelle über den Einlass;
Erregen der Elektroden, um einen Stromfluss von einer ersten Elektrode zu einer zweiten Elektrode zu bewirken, und
Ableiten der zu behandelnden Flüssigkeit aus der Elektrolysezelle über den Auslass, wobei
a) eine Gleichstromquelle verwendet wird, um die Elektroden bei einer Stromdichte von 1,5mA/cm² (0,01 Ampere pro Quadratzoll) oder 4,5mA/cm² (0,03 Ampere pro Quadratzoll) zu erregen, und der Orangensaft 10 Sekunden lang in der Elektrolysezelle verbleibt oder
b) eine Gleichstromquelle verwendet wird, um die Elektroden bei einer Stromdichte von 1,5mA/cm² (0,01 Ampere pro Quadratzoll) zu erregen, und der Orangensaft 30 Sekunden lang in der Elektrolysezelle verbleibt.

2. Verfahren nach Anspruch 1, wobei der Orangensaft kontinuierlich in die Elektrolysezelle eingeleitet und aus dieser entnommen wird.

3. Verfahren nach Anspruch 1, wobei der Orangensaft über einen bestimmten Zeitraum in der Elektrolysezelle gehalten wird und anschließend entnommen wird.

## Revendications

1. Procédé pour prolonger la durée de conservation de jus d'oranges pressées comprenant les étapes consistant à :
fournir une cellule électrolytique ayant une paire d'électrodes en titane avec un revêtement de ruthénium espacées de 0,63 cm (1/4 pouce), chaque électrode ayant une largeur de 10 cm (4 pouces) et une longueur de 15 cm (6 pouces), une entrée pour le liquide, une sortie pour le liquide, et une source d'énergie ;
introduire le jus d'orange dans la cellule électrolytique via l'entrée ;
exciter les électrodes de manière à amener un courant à passer depuis une première électrode vers une seconde électrode ; et
enlever le liquide à traiter depuis la cellule électrolytique via la sortie, dans lequel
a) une source d'énergie à courant continu est utilisée pour exciter les électrodes à raison d'une densité de courant de 1,5 mA/cm² (0,01 A par pouce carré) ou 4,5 mA/cm²) (0,03 A par pouce carré) et le jus d'orange réside dans la cellule électrolytique pendant 10 secondes, ou
b) une source d'énergie à courant continu est utilisée pour exciter les électrodes à raison d'une densité de courant de 1,5 mAlcm² (0,01 A par pouce carré) et le jus d'orange réside dans la cellule électrolytique pendant 30 secondes.

2. Procédé selon la revendication 1, dans lequel le jus d'orange est introduit en continu dans et extrait en continu hors de la cellule électrolytique.

3. Procédé selon la revendication 1, dans lequel le jus d'orange est maintenu dans la cellule électrolytique pendant une période temporelle donnée et est alors enlevé.
